# EUROPÄISCHE PATENTANMELDUNG

(11) **EP 0 893 629 A1**
(43) Veröffentlichungstag der Anmeldung: **27.01.1999**
(21) Anmeldenummer: 98111398.8
(22) Anmeldetag: 20.06.1998
(51) Int. Cl.: F16J 15/02, D06M 23/12, D06M 15/693, D06M 15/227, D06M 15/233, D06M 15/263, D06M 15/564, D06M 15/643, D06M 11/74, C03C 17/32, C03C 17/30

(54) **Garn zum Dichten**

(30) Priorität: 22.07.1997 DE 19731512
(71) Anmelder: Bamberger Kaliko GmbH, 96052 Bamberg (DE)
(72) Erfinder: Klenner, Peter, 96120 Bischberg (DE); Füssmann, Klaus, 96120 Bischberg (DE); Polivka, Werner, 96110 Schesslitz (DE); Hiemenz, Brigitte, 96120 Bischberg (DE)
(74) Vertreter: Schneider, Egon

(57) **Zusammenfassung**

Die Erfindung bezieht sich auf ein Garn für die Herstellung von Dichtpackungen für statische und dynamische Anwendungen, die in einem Packungsraum untergebracht sind, oder für Dichtfäden von Metallschläuchen aus anorganischen und/oder organischen einem oder mehreren Filamenten und/oder Stapelfasern.

Um Garne für Dichtpackungen oder für Dichtfäden in Metallschläuchen bereitzustellen, die im Gebrauch sowohl bei statischer als auch bei dynamischer Belastung langanhaltend stabil sind, wird vorgeschlagen, daß die Oberfläche des Garns mit einem organischen polymeren Werkstoff beschichtet und/oder getränkt ist, der bei Temperaturerhöhung expandiert.

## Beschreibung

Die Erfindung betrifft ein Garn für die Herstellung von Dichtpackungen für statische und dynamische Anwendungen, die in einem Packungsraum untergebracht sind, oder für Dichtfäden von Metallschläuchen aus anorganischen und/oder organischen einem oder mehreren Filamenten und/oder Stapelfasern.

Dichtungen allgemein sind abdichtende Teile an ruhenden oder beweglichen Trennflächen von Maschinen, Apparaten, Rohrleitungen, Armaturen, Kesseln und Behältern. Für die unterschiedlichen Einsatzgebiete, für die Dichtmaterialien verwendet werden, werden verschiedene Anforderungen an die jeweilige Dichtung gestellt. So werden die Dichtungen z. B. nach DIN 3750 z. B. in Berührungsdichtungen an ruhenden und gleitenden Flächen und berührungsfreie Dichtungen eingeteilt. Zu den Berührungsdichtungen an ruhenden Flächen zählen z. B. Flachdichtungen und Profildichtungen. So haben Flachdichtungen die Aufgabe z. B. Stoßstellen zwischen Rohrleitungen zur Erzeugung eines geschlossenen Systems abzudichten. Für den Verwendungsbereich von Flachdichtungen wurde in der EP 0 774 604 A1 vorgeschlagen, daß diese zumindest einen organisch polymeren Werkstoff und Armierungsfasern aufweisen, wobei der organisch polymere Werkstoff bei Temperaturerhöhung expandiert. Damit können Flachdichtungen bereitgestellt werden, die den hohen Anforderungen bezüglich Druck, Temperatur und verschiedenen Medien gerecht werden. Diese Flachdichtung hat allerdings den Nachteil, daß sie nur einer statischen Belastung ausgesetzt werden kann. Aufgrund ihrer Geometrie und ihres Aufbaus können Flachdichtungen nicht für die Abdichtung zwischen beweglichen Teilen, z. B. einer drehenden Welle, verwendet werden, so daß diese für dynamische Anwendungen nicht geeignet sind.

Im Vergleich zu den Flachdichtungen können auch Dichtpackungen (Dichtungsteile, die in einem Packungsraum untergebracht sind) für eine statische Abdichtung (Isolation) z. B. von Ofentüren, Reinigungsöffnungen, Kesseln oder Behältern verwendet werden. Es gibt aber auch Dichtpackungen, die einer dynamischen Belastung standhalten müssen, so daß diese in der Lage sind durch axiale Kräfte radial abzudichten. Diese sind hervorragend geeignet für den Einsatz in Kolben und Kreiselpumpen und bei langsam drehenden druckbelasteten Wellen. Aufgrund der bei diesen Anwendungen auftretenden Kräfte müssen die Dichtpackungen so gestaltet sein, daß sie in der Lage sind langzeitig ausreichend abzudichten und nicht aufgrund der auftretenden Reibung nachgezogen oder sogar durch einen Bruch der Garne vorzeitig ausgewechselt werden müssen. Aufgrund der starken dynamischen Beanspruchung müssen diese Dichtpackungen in den hierfür vorgesehenen Raum fest eingeklemmt werden, wobei diese auch nicht beschädigt werden dürfen.

Weiterhin sind auch Dichtfäden von Metallschläuchen(Wellen- bzw. Wickelschläuche) einer dynamischen Belastung ausgesetzt. Diese werden bei der Herstellung der Metallschläuche in den Falz, der zum Verhaken der einzelnen Wicklungen (Wendeln) dient, eingelegt, um den Metallschlauch abzudichten. Da gewickelte Metallschläuche im wesentlichen in solchen Bereichen eingesetzt werden, wo ihre Flexibilität, Querdruckbelastbarkeit und Zugfestigkeit ausgenutzt wird, unterliegt auch der Dichtfaden (im allgemeinen Endlosfaden) dieser Beanspruchung. Dieser Dichtfaden kann aus verschiedenen anorganischen (z. B. Glas) und/oder organischen (z. B. Aramid) Materialien bestehen. Im allgemeinen besitzen die Dichtfäden einen Durchmesser von 0,5 bis 2 mm, wobei der Dichtfaden aus Garnen mit einen oder mehreren Filamenten bestehen kann, die verdreht oder verflochten sein können. Auch sind Z. B. Flechtungen aus verschiedenen Garnen bekannt. An die Garne der Dichtfäden werden ähnliche Anforderungen hinsichtlich ihrer dynamischen Belastbarkeit gestellt, wie bei den Dichtpackungen (z. B. Verhinderung der Reibung der Garne) bereits erwähnt. Zusätzlich tritt bei Dichtfäden die Schwierigkeit auf, daß sie in engen Toleranzen über ihre gesamte Länge einen konstanten Durchmesser aufweisen müssen.

Bisher hat man für solche Dichtpackungen (Flechtpackungen) bzw. Dichtfäden Garne verwendet, die asbesthaltig waren und die aufgrund der Struktur der Asbestfaser den Eigenschaften, die Dichtpackungen/Dichtfäden aufweisen müssen, gerecht wurden. Nach dem gesetzlichen Asbestverbot mußte auf Faserstoffe zurückgegriffen werden, die die Anforderungen als Packungsrohstoff nicht in jedem Fall erfüllten. So werden bisher Mineralfasern mit rundem Querschnitt und synthetische sowie Naturfasern (Filamente) mit rundem, nierenförmigem bzw. sternförmigem Querschnitt verwendet. Diese können nicht hohlraumfrei verdichtet werden, so daß die Dichtwirkung in vielen Fällen den auftretenden dynamischen Belastungen nicht langanhaltend standhalten konnte.

Die Aufgabe der vorliegenden Erfindung besteht darin, Garne für Dichtpackungen oder für Dichtfäden in Metallschläuchen bereitzustellen, die es ermöglichen, daß die Dichtpackungen/Dichtfäden im Gebrauch sowohl bei statischer als auch bei dynamischer Belastung langanhaltend stabil sind.

Gelöst wird diese Aufgabe erfindungsgemäß dadurch, daß die Oberfläche des Garns mit einem organischen polymeren Werkstoff beschichtet und/oder getränkt ist, der bei Temperaturerhöhung expandiert.

Überraschenderweise konnte festgestellt werden, daß die Zwischenräume der Filamente (Fasern) des Garns durch diesen organischen polymeren Werkstoff ausgefüllt sind, der in der Lage ist, bei einer Temperaturerhöhung, z. B. im Gebrauch, zu expandieren. Damit wird es bei dynamischer Belastung der Dichtpackung/Dichtfäden möglich, daß die einzelnen Filamente/Garne sich nicht berühren können, so daß z. B. ein Bruch der Dichtungpackung/Dichtfadens aufgrund aneinander reibenden Filamenten/Garnen vermieden werden kann. Des Weiteren kann das Volumen der Dichtpackung genau an den für die Dichtpackung zur Verfügung stehenden Packungsraum angepaßt werden, so daß es nicht mehr erforderlich ist, eine Vielfalt an Querschnittsgrößen von Dichtpackungen bereitzustellen, so daß Herstellungskosten bzw. Kosten für die Lagerung von verschiedenen Dichtpackungen gespart werden können. Als weiterer Vorteil hat sich herausgestellt, daß die Dichtpackungen auch besser demontierbar sind, da die Dichtpackung aufgrund der Expansion leichter von dem Packungszieher greifar sind. Die Volumenvergrößerung spielt auch für den Dichtfaden des gewickelten Metallschlauches eine große Rolle, da erfindungsgemäß nun gewährleistet werden kann, daß der gesamte Falzhohlraum zwischen den ineinandergreifenden Wicklungen bei Temperaturerhöhung ausgefüllt wird, trotz Einführung eines dazu relativ dünnen Dichtfadens, der sich vorteilhaft während der Herstellung (Wickelvorgang) des Metallschlauches erwiesen hat. Der Durchmesser des Dichtfadens kann nunmehr größeren Toleranzen unterliegen, da dieser durch Expansion des organisch polymeren Werkstoffs ausgeglichen werden kann.

Unter einem Garn soll anmeldungsgemäß ein Festigkeitsträger aus anorganischem wie z. B. Glas, Metall und/oder organischem (z. B. Polyester, Polyamid, Baumwolle) Material verstanden werden. Das Garn kann aus einen oder mehreren Filamenten und/oder Stapelfasern aufgebaut sein. Wenn das Garn Multi-Filamente und/oder -Stapelfasern aufweist, können diese verdreht, verflochten u. ä. sein. Unter dem Begriff Garn sollen auch Zwirne fallen, d. h. Einzelgarne, die durch eine Verzwirnung zusammengeführt werden. Es ist aber auch möglich, daß das Garn aus einem inneren Filament/Stapelfaser (z. B. Glasseele, Metalldraht) besteht und sich um dieses Filament/Stapelfaser Filamente/Stapelfasern aus anderen z. B. anorganischen und/oder organischen Materialien befinden. So sind auch Mischungen aus einem oder mehreren Materialien denkbar, die durch ein Luftblastexturierverfahren innig verwirbelt werden. Dabei ist es möglich, daß jedes einzelne Filament und/oder Stapelfaser mit dem organisch polymeren Werkstoff, der bei Temperaturerhöhung expandiert, beschichtet und/oder getränkt (imprägniert) ist und sich nach dieser Beschichtung/Tränkung die Herstellung des Garns z. B. durch Verzwirnung anschließt. Wichtig dabei ist, daß die Oberfläche des Garns auch mit einer solchen Schicht bedeckt ist, was im allgemeinen durch eine Behandlung der einzelnen Filamente/Stapelfasern auch erreicht wird, so daß bei der weiteren Herstellung von Dichtpackungen die im allgemeinen aus mehreren Garnen aufgebaut sind, der Zwischenraum dieser Garne im wesentlichen durch den organisch polymeren Werkstoff im Gebrauch der Dichtpackung ausgefüllt ist. Auch soll damit eine Anpassung an die Dichtpackung oder des Dichtfadens umgebenden Teile (Packungsraum, Falzhohlraum) erfolgen. Vorteilhafterweise soll das Garn nach seiner Fertigstellung (z. B. Verzwirnen) mit dem organisch polymeren Werkstoff beschichtet und/oder getränkt werden, so daß nur ein einmaliger Beschichtungs-/Tränkungsvorgang erforderlich ist. Prinzipiell ist es auch möglich, erst die einzelnen Filamente/Stapelfasern zu behandeln und nach dem z. B. Verzwirnen nochmals eine Beschichtung/Tränkung vorzunehmen.

Für die Herstellung der erfindungsgemäßen Garne für Dichtpackungen/Dichtfäden werden z. B. organisch polymere Werkstoffe bevorzugt auf der Basis von Acrylat, Styren-Butadien-Copolymer, Polyurethan und andere in Form von Latices oder Dispersionen verwendet. Als organisch polymere Werkstoffe können außerdem elastomere Werkstoffe zum Einsatz kommen, z. B. auf der Basis von synthetischem (z. B. Silicon-Kautschuk) und/oder natürlichem Kautschuk. Durch die elastischen Eigenschaften des organisch polymeren Werkstoffs wird die dynamisch/mechanische Beständigkeit der Dichtpackung/Dichtfadens positiv beeinflußt.

Als Treibmittel kommen vorzugsweise Mikroperlen zum Einsatz. Diese Mikroperlen, die aus mikroverkapselten Lösungsmitteln bestehen, werden bei einer Temperatur von ca. 70 - 180°C aktiv. Bei dieser Temperatur wird dann das Volumen der Dichtpackung/Dichtfadens vergrößert. Zusätzlich können dem organisch polymeren Werkstoff auch Blähgraphit und/oder Vermiculite zugesetzt werden. Diese Treibmittel bewirken eine Expansion des organisch polymeren Werkstoffs bei Temperaturen > 180°C, so daß z. B. durch Kombination dieser mit den Mikroperlen der Anwendungsbereich der Dichtpackung/Dichtfaden über einen großen Temperaturbereich gewährleistet ist. Prinzipiell ist es aber auch möglich, daß der organisch polymere Werkstoff von sich aus bei Temperaturerhöhung expandiert, z. B. durch während der Polymerisation bzw. Vernetzung freiwerdender Gase (Wasser, Kohlendioxid), so daß eine Volumenvergrößerung des organisch polymeren Werkstoffs durch Gasblasenbildung eintritt.

Es ist möglich, die Garne mit expandierfähigem organischen Polymeren zu beschichten und durch Temperaturerhöhung bereits vor der Herstellung der Dichtpackung/Dichtfaden (z. B. durch Flechten der einzelnen Garne) eine einmalige Volumenzunahme zu erzeugen. Es ist aber auch möglich, den Expansionsprozeß erst während des Gebrauchs bei erhöhter Temperatur stattfinden zu lassen. Auch ist es denkbar, vor dem Gebrauch der Dichtpackung/Dichtfaden eine teilweise Volumenvergrößerung vorzunehmen und den endgültigen Zustand der Dichtpackung/Dichtfadens erst während des Anwendungsfalls zu erreichen. Dadurch kann die Dichtwirkung aufgrund der Möglichkeit sich in bestimmten Grenzen des abzudichtenden Teils anzupassen, verbessert werden.

Es werden Dichtpackungen/Dichtfäden erzielt, die nach der Expansion des organisch polymeren Werkstoffes dicht gepackt sind, so daß der Querschnitt der verwendeten Filamente keinen Einfluß auf die Verdichtungswirkung der Dichtpackung/Dichtfaden hat, wie es bei der Verwendung von synthetischen Fasern ohne expandierfähige Beschichtung der Fall ist. Erfindungsgemäß können Dichtpackungen/Dichtfäden bereitgestellt werden, die sowohl statischen als auch dynamischen Belastungen standhalten. Insbesondere ist überraschend, daß die dynamische Belastbarkeit von Dichtpackungen/Dichtfäden erhöht werden konnte, da die Filamente und die Garne aufgrund ihrer voluminösen Beschichtung nicht aneinander reiben können und diese Beschichtung so flexibel ausgebildet ist, daß sie diese Beanspruchbarkeit zuläßt. Damit können z. B. Dichtpackungen bereitgestellt werden, die eine hervorragende Verstemmbarkeit beim Ein- und Ausbau aufweisen und eine höhere Lebensdauer aufgrund größerer Nachstellintervalle besitzen.

Die erfindungsgemäßen Dichtpackungen/Dichtfäden lassen sich herstellen, indem das Garn mit der Dispersion oder Lösung des organisch polymeren Werkstoffs, der bei Temperaturerhöhung expandiert, bzw. mit dessen Vorprodukten getränkt und/oder beschichtet wird. Dabei sollte vorteilhafterweise die Mehrzahl der verwendeten Garne behandelt werden, um Dichtpackungen/Dichtfäden zu erhalten, dessen Zwischenräume im wesentlichen den expandierten organischen Werkstoff aufweisen. Zumindest aber sollte die Oberfläche eines Garnes die erfindungsgemäße Beschichtung/Tränkung aufweisen. Anschließend erfolgt die Trocknung der Beschichtung und/oder Tränkung des Garns bei Temperaturen unterhalb der Expansionstemperatur des organisch polymeren Werkstoffs. Hierfür können übliche Trocknungsanlagen z. B. der textilen Garnveredlung verwendet werden. Die Lagerung der behandelten Garne kann auf Spulen erfolgen. Die so behandelten Garne können als Dichtfäden für gewickelte Metallschläuche verwendet werden. Für die Herstellung von Dichtpackungen werden die beschichteten und/oder getränkten Garne durch übliche Verfahren wie Flechten und/oder Zwirnen u.ä. wie z. B. Weben und/oder Wirken weiterverarbeitet. Die Dichtpackung/Dichtfaden kann als ganzes oder teilweise (verschiedene Garne bzw. abschnittsweise) vorexpandiert sein, so daß der Endzustand während des Gebrauches bei Expansionstemperatur erst erzielt wird. Es ist aber auch möglich, durch eine einmalige Volumenzunahme den Endzustand, sei es während des Einsatzes der Dichtpackung/Dichtfaden oder vorher, zu erzeugen.

Zusätzlich zu diesen Verfahrensschritten kann die Oberfläche des beschichtetenund/oder getränkten Garns vor und/oder nach dem Verfestigen mit weiteren Werkstoffschichten und/oder Ausrüstungsmaterialien beschichtet und/oder getränkt werden. Insbesondere für Dichtpackungen/Dichtfäden, die für dynamische Anwendungen bestimmt sind, kann deren Gleitfähigkeit mit entsprechenden Hilfsmitteln wie Siliconöl oder PTFE-Dispersionen erhöht werden. Diese Gleitmittel können z. B. nach der Beschichtung und/oder Tränkung des organischen polymeren Werkstoffs (vor oder nach dessen Expansion) aufgebracht werden. Es ist aber auch möglich, daß diese Gleitmittel dem organisch polymeren Werkstoff bereits zugemischt werden, so daß ein zusätzlicher Auftrag des Gleitmittels und damit ein zusätzlicher Verfahrensschritt vermieden werden kann. Des Weiteren ist es möglich, daß der Werkstoff, mit dem die Garne getränkt werden, und der Werkstoff, mit dem sie gegebenenfalls beschichtet werden, identisch oder verschieden sind. Weiterhin ist es möglich, daß die fertige Dichtpackung/Dichtfaden mit weiteren Werkstoffschichten überzogen wird. Auch ist es möglich, daß Garn oder die Dichtpackung/Dichtfaden öl- oder wasserabweisend zu gestalten. So können Schichten z. B. aus Fluorkarbonharzen, Wachsen, Paraffinen und dergleichen verwendet werden.

Anhand eines Beispiels soll die Erfindung näher erläutert werden: Ein oder mehrere Glasfilamente werden nach dem Luftblastexturierverfahren behandelt. Anschließend wird dieses Garn auf einer Garnbeschichtungsanlage TS-2 von Dietze und Schell, Coburg, mit expansionsfähiger Paste beschichtet. Bei der Polymer-Dispersion handelt es sich um ein Acrylat (Emce foam 185 - Emce Chemie, Düren). Der Pastenauftrag erfolgt über ein Kegelpflatschwerk, welches einen allseitigen Beschichtungsauftrag gewährleistet. Nach dem kontinuierlich nachgeschalteten Trockenvorgang bei einer Temperatur von ca. 80 - 100 °C über ein Galettenlaufwerk kann das beschichtete bzw. durchtränkte Garn mehrfach den Trockner durchlaufen und anschließend trocken auf eine Präzisionskreuzspule aufgewickelt werden. Ein so behandeltes Garn kann über ein an sich bekanntes Flecht- und Seilverfahren zu quadratischen, rechteckigen, runden bzw. ähnlichen Geometrien aufweisenden Dichtpackungen weiter verarbeitet werden. Diese Dichtpackungen können für statische Anwendungen Verwendung finden. Werden aber Anforderungen hinsichtlich der dynamischen Belastbarkeit von Dichtpackungen gestellt, können zusätzlich der Paste auch Mittel zur Verbesserung der Gleitfähigkeit wie z. B. Silikonöl zugesetzt werden.

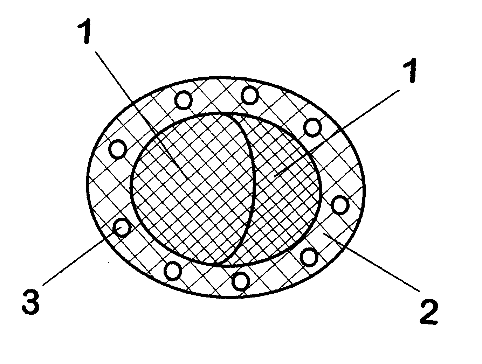

Die einzige Figur zeigt einen Querschnitt des erfindungsgemäßen Garns für die Herstellung von Dichtpackungen/Dichtfäden. Das Garn 1 besteht aus zwei verzwirnten Kynoleinzelgarnen der Firma Chesterton. Dieses Garn nummermetrisch 2 (Nm 2/2) besitzt einen Durchmesser von 0,88 mm und ein Gewicht von 0,983 g/m. Nach der Behandlung (Tauchen) mit der wässrigen Acrylat-Dispersion 2 weist das Garn einen Durchmesser von 1,27 mm auf. Nach einer 5-minütigen Temperaturbehandlung bei 150 °C vergrößerte sich der Durchmesser auf 2,055 mm. Diese Volumenzunahme beruht auf der Vergrößerung der Mikroperlen 3, die durch das in der Acrylat-Dispersion enthaltende mikroverkapselte Lösungsmittel (Isobutan) bewirkt wird.

## Patentansprüche

1. Garn für die Herstellung von Dichtpackungen für statische und dynamische Anwendungen, die in einem Packungsraum untergebracht sind, oder für Dichtfäden von Metallschläuchen aus anorganischen und/oder organischen einem oder mehreren Filamenten und/oder Stapelfasern,
**dadurch gekennzeichnet,** daß
die Oberfläche des Garns mit einem organischen polymeren Werkstoff beschichtet und/oder getränkt ist, der bei Temperaturerhöhung expandiert.

2. Garn nach Anspruch 1, dadurch gekennzeichnet, daß der organisch polymere Werkstoff zumindest während des Gebrauches des Garnes bei Temperaturerhöhung expandiert.

3. Garn nach Anspruch 1 und/oder 2, dadurch gekennzeichnet, daß der organisch polymere Werkstoff als Treibmittel mikroverkapselte Lösungsmittelteilchen (Mikroperlen) enthält.

4. Garn nach zumindest einem der vorhergehenden Ansprüche, dadurch gekennzeichnet, daß der organisch polymere Werkstoff als Treibmittel, Blähgraphit und/oder Vermiculite enthält.

5. Garn nach zumindest einem der vorhergehenden Ansprüche, dadurch gekennzeichnet, daß der organisch polymere Werkstoff ein elastomerer Werkstoff ist.

6. Verfahren zur Herstellung von Dichtpackungen, dadurch gekennzeichnet, daß zumindest ein Garn nach zumindest einem der Ansprüche 1 bis 5 geflochten und/oder verzwirnt u. ä. wird.

7. Verfahren zur Herstellung von Dichtpackungen nach Anspruch 6, dadurch gekennzeichnet, daß die Oberfläche des beschichteten Garns vor und/oder nach der Expansion mit weiteren Werkstoffschichten und/oder Ausrüstungsmaterialien beschichtet und/oder getränkt wird.

8. Verwendung eines Garns nach zumindest einem der vorhergehenden Ansprüche für Dichtpackungen, die für statische Anwendungen geeignet sind.

9. Verwendung eines Garns nach zumindest einem der vorhergehenden Ansprüche für Dichtpackungen, die für dynamische Anwendungen geeignet sind.

10. Verwendung eines Garns nach zumindest einem der vorhergehenden Ansprüche für Dichtfäden von Metallschläuchen.
